# EUROPÄISCHE PATENTSCHRIFT

(11) **EP 3 245 522 B1**
(45) Veröffentlichungstag und Bekanntmachung des Hinweises auf die Patenterteilung: **13.11.2019**
(21) Anmeldenummer: 16701730.0
(22) Anmeldetag: 12.01.2016
(51) Int. Cl.: G01P 5/02, G01F 1/28, G01L 7/02, G01P 13/00

(54) **VORRICHTUNG UND VERFAHREN ZUM BESTIMMEN MINDESTENS EINES PARAMETERS EINER STRÖMUNG EINES FLUIDS**
DEVICE AND METHOD FOR DETERMINING AT LEAST ONE PARAMETER OF A FLOW OF A FLUID
DISPOSITIF ET PROCÉDÉ PERMETTANT DE DÉTERMINER AU MOINS UN PARAMÈTRE D'ÉCOULEMENT D'UN FLUIDE

(30) Priorität: 12.01.2015 DE 102015000064
(43) Veröffentlichungstag der Anmeldung: 22.11.2017
(73) Patentinhaber: Carl von Ossietzky Universität Oldenburg, 26129 Oldenburg (DE)
(72) Erfinder: PEINKE, Joachim, 26125 Oldenburg (DE); HÖLLING, Michael, 26129 Oldenburg (DE); BARTH, Stephan, 26123 Oldenburg (DE); PUCZYLOWSKI, Jaroslaw, 26122 Oldenburg (DE)
(74) Vertreter: Tappe, Udo
(86) Internationale Anmeldenummer: PCT/EP2016/050457
(87) Internationale Veröffentlichungsnummer: WO 2016/113247

(56) Entgegenhaltungen:
- JP-A- 2006 023 240
- US-A- 3 216 247
- US-A1- 2009 241 686
- BARTH STEPHAN ET AL: "Laser-cantilever anemometer: A new high-resolution sensor for air and liquid flows", REVIEW OF SCIENTIFIC INSTRUMENTS, AIP, MELVILLE, NY, US, Bd. 76, Nr. 7, 11. Juli 2005 (2005-07-11), Seiten 75110-075110, XP012079592, ISSN: 0034-6748

## Beschreibung

Die Erfindung betrifft eine Vorrichtung zum Bestimmen mindestens eines Parameters einer Strömung eines Fluids mit einem elastisch deformierbaren Ausleger, der mindestens eine Anströmfläche für das Fluid hat, und mit einer Messeinrichtung zum Messen der Deformation des Auslegers, wobei mindestens ein Abschnitt der Anströmfläche schräg und/oder gekrümmt zu einer Hauptanströmrichtung des Fluids ausgerichtet ist, der Ausleger an einem freien Ende eine Anströmstruktur aufweist, und die Anströmstruktur die mindestens eine Anströmfläche für das Fluid hat. Des Weiteren betrifft die Erfindung ein Verfahren zum Bestimmen mindestens eines Parameters einer Strömung eines Fluids mit einer erfindungsgemäßen Vorrichtung, bei dem ein elastisch deformierbarer Ausleger mit mindestens einer Anströmfläche für das Fluid in eine Strömung eingebracht wird, und bei dem mit einer Messeinrichtung die Deformation des Auslegers aufgrund der auf die Anströmfläche einwirkenden Kräfte der Strömung gemessen wird, wobei mindestens ein Abschnitt der Anströmfläche schräg und/oder gekrümmt zu einer Hauptanströmrichtung des Fluids ausgerichtet wird, der Ausleger an einem freien Ende eine Anströmstruktur aufweist, und die Anströmstruktur die mindestens eine Anströmfläche für das Fluid hat.

Eine derartige Vorrichtung und ein derartiges Verfahren sind aus der FR 2 764 066 A1 bekannt.

Des Weiteren sind eine Vorrichtung und ein Verfahren ohne eine Schräge und/oder gekrümmte Ausrichtung eines Abschnittes der Anströmfläche zur Hauptanströmrichtung des Fluids aus den wissenschaftlichen Artikeln *"*New anemometer for offshore use, J. Puczylowski, J. Peinke und M. Hölling, Journal of Physics: Conference Series 318 (2011) 072015" und *"*Laser-cantilever anemometer: A new high-resolution sensor for air and liquid flows. J. Barth et al., Review of Scientific Instruments 76 (2005) 075110", bekannt.

Mittels einer entsprechenden Vorrichtung lassen sich Parameter einer Fluidströmung, insbesondere eine Geschwindigkeit und/oder eine Strömungsrichtung eines Fluids, bestimmen. Hierzu kann der Ausleger einer Strömung ausgesetzt werden, wobei durch das sich bewegende Fluid eine Kraft auf den Ausleger wirkt. Diese Kraft führt zu einer Deformation, insbesondere einer Verbiegung und/oder Torsion, des Auslegers. Die gewünschte Information, insbesondere über die Geschwindigkeit und/oder einen Angriffswinkel, des Fluids sind in der Deformation enthalten. Diese Information kann mittels verschiedener, bereits verfügbarer Methoden ermittelt werden. Vorzugsweise wird das sogenannte Laserzeiger-Prinzip, insbesondere aus der Rasterkraftmikroskopie bekannt, eingesetzt.

Aus der US 3,216,247 A ist eine Vorrichtung zum Messen einer Windrichtung und eines Winddruckes bekannt, bei der eine konische Haube mit einer konischen Nase vorgesehen ist. Die Nase ist über ein Gelenk mit einer Tragstruktur verbunden. Mittels einer Lampe wird ein Lichtstrahl auf eine Reflektionsfläche gerichtet, wobei die Reflektionsfläche an der Haube befestigt ist. Die Haube bzw. die Nase wird bei einer einwirkenden Strömung mittels des Gelenks in Bezug zur Tragstruktur ausgelenkt. Hierdurch wird auch die relative Position der Reflektionsfläche zur Messeinrichtung verändert, wodurch die gewünschten Parameter bestimmbar sind.

US 2009/0241686 A1 betrifft einen MEMS (mikroelektromechanisches System) Sensor zum Erfassen einer Luftbewegung bekannt. Hierbei können flache, elastische gelagerte Ausleger deformiert werden, wobei die Deformation mit einer Messeinrichtung erfasst wird. Dabei kann ein Laserstrahl auf eine rückwärtige Reflektionsfläche der Ausleger gerichtet sein.

Aus der JP 2006-23240 A ist ein Sensor mit einem elastisch deformierbaren Ausleger bekannt, wobei eine Anströmfläche des Auslegers schräg ausgerichtet ist. Ein Laserstrahl wird auf eine Reflektionsfläche des Auslegers gerichtet und die Auslenkung des Auslegers mit einer Messeinrichtung erfasst.

Nachteilig bei den bekannten Vorrichtungen zum Bestimmen eines Parameters einer Strömung eines Fluids ist, dass die Winkelauflösung beschränkt ist. Daher ist es eine der Erfindung zugrunde liegende Aufgabe, eine Vorrichtung und ein Verfahren der eingangs genannten Art derart weiterzuentwickeln, dass der mindestens eine zu bestimmende Parameter der Fluidströmung mit einer höheren Auflösung, insbesondere einer höheren Winkelauflösung, bestimmbar ist.

Die der Erfindung zugrunde liegende Aufgabe wird mittels einer Vorrichtung und einem Verfahren nach den unabhängigen Ansprüchen gelöst.

Hierbei ist von Vorteil, dass aufgrund der schrägen und/oder gekrümmten Anordnung mindestens eines Abschnittes der Anströmfläche zu einer Hauptanströmrichtung des Fluids eine höhere Winkelauflösung in Bezug auf den mindestens einen zu bestimmenden Parameter der Fluidströmung erreichbar ist. Insbesondere lässt sich eine Geschwindigkeit und/oder eine Strömungsrichtung eines Fluids mit einer höheren Winkelauflösung bestimmen. Somit kann eine zur Hauptanströmrichtung des Fluids vorhandene Querkomponente bzw. transversale Komponente der Strömung besser erfasst und aufgelöst werden.

Im Rahmen der vorliegenden Erfindung kann die Hauptanströmrichtung des Fluids als eine mittlere und/oder durchschnittliche Strömungsrichtung des Fluids vorgegeben sein. Insbesondere ist der Hauptanströmrichtung des Fluids ein Anströmwinkel von 0° zugeordnet. Die zu bestimmenden Strömungsrichtungen und/oder Anströmwinkel des Fluids können in einem Winkelbereich von -45° bis +45°, besonders bevorzugt von -90° bis +90°, in Bezug zum Anströmwinkel, insbesondere um den Anströmwinkel von 0° und/oder der Hauptanströmrichtung des Fluids verteilt sein. Vorzugsweise sind die zu bestimmenden Strömungsrichtungen und/oder Anströmwinkel des Fluids gleichmäßig, spiegelsymmetrisch und/oder gleichartig um die Hauptanströmrichtung des Fluids verteilt.

Nach einer weiteren Ausführungsform ist eine Ebene und/oder eine Tangente einer Krümmung der Anströmfläche schräg zu der Hauptanströmrichtung des Fluids ausgerichtet. Insbesondere ist eine Mehrzahl von Tangenten einer Krümmung der Anströmfläche schräg zu der Hauptanströmrichtung des Fluids ausgerichtet. Aufgrund der schrägen Anordnung einer Ebene der Anströmfläche und/oder mindestens einer Tangente einer Krümmung der Anströmfläche zu der Hauptanströmrichtung ist ein verbessertes Ansprechverhalten des Auslegers realisierbar. Vorzugsweise ergibt sich ein verbessertes Ansprechverhalten hinsichtlich einer Querkomponente und/oder einer transversalen Komponente der Strömung des Fluids quer, insbesondere rechtwinklig, zur Hauptanströmrichtung des Fluids. Vorzugsweise ist mittels der schrägen und/oder gekrümmten Ausrichtung der Anströmfläche zu der Hauptanströmrichtung eine stärkere Torsion des Auslegers erreichbar. Die Ebene und/oder die Tangente der Krümmung der Anströmfläche kann schräg zu einer Längsachse der Vorrichtung ausgerichtet sein. Vorzugsweise ist unter einer schrägen Ausrichtung mindestens eines Abschnittes der Anströmfläche im Rahmen der vorliegenden Erfindung eine Ausrichtung einer Ebene und/oder einer Tangente einer Krümmung der Anströmfläche in Bezug zu der Hauptanströmrichtung mit einem Winkel von weniger als 90°, insbesondere im Bereich von 40° bis 50°, besonders bevorzugt von 45°, zu verstehen.

Gemäß der Erfindung weist die Messeinrichtung einen Laser auf. Eine Ebene und/oder eine Tangente einer Krümmung der Anströmfläche kann schräg zu einem Strahl bzw. einer Strahlachse des Lasers ausgerichtet sein. Die Messeinrichtung weist eine Reflektionsfläche für den Laser auf. Insbesondere ist eine Ebene der Reflektionsfläche zum Reflektieren des Laserstrahls schräg zu der Strahlachse des Lasers ausgerichtet. Die Strahlachse des Lasers ist auf die Reflektionsfläche des Auslegers gerichtet. Die Strahlachse des Lasers kann quer und/oder in einem rechten Winkel zur Ebene der Reflektionsfläche, insbesondere in einem unbelasteten Zustand des Auslegers, auftreffen. Vorzugsweise wirkt in einem unbelasteten Zustand des Auslegers keine Kraft einer Strömung des Fluids auf den Ausleger ein. Insbesondere ist die Reflektionsfläche auf einer von der Anströmfläche abgewandten Seite des Auslegers angeordnet. Vorzugsweise ist die Reflektionsfläche in einem Bereich eines freien Endes des Auslegers angeordnet. Insbesondere weist die Reflektionsfläche ein den Strahl des Lasers reflektierendes Material auf. Beispielsweise kann die Reflektionsfläche aus Aluminium gebildet sein.

Der mindestens eine Abschnitt der Anströmfläche, eine Ebene der mindestens einen Anströmfläche und/oder eine Tangente einer Krümmung der mindestens einen Anströmfläche kann mit einem Winkel im Bereich von 35° bis 55°, insbesondere in einem Bereich von 40° bis 50°, vorzugsweise mit einem Winkel von 45°, schräg zur Hauptanströmrichtung des Fluids ausgerichtet sein. Alternativ oder zusätzlich kann eine entsprechende Ausrichtung schräg zu einer Längsachse der Vorrichtung und/oder schräg zu einer Strahlachse eines Lasers der Messeinrichtung ausgerichtet sein.

Nach einer weiteren Ausführungsform ist der Ausleger einer Tragstruktur zugeordnet. Der Ausleger kann an der Tragstruktur und/oder einem an der Tragstruktur angeordneten Sensorelement befestigt sein. Vorzugsweise bilden der Ausleger und die Tragstruktur ein Sensorelement. Das Sensorelement, der Ausleger und/oder die Tragstruktur können aus Silizium oder Edelstahl hergestellt sein. Vorzugsweise ist der Ausleger stabartig und/oder plattenartig ausgebildet. Insbesondere ist die Anströmfläche des Auslegers rechteckig ausgebildet. Der Ausleger kann mit einem ersten Ende an der Tragstruktur befestigt sein. Ausgehend von der Tragstruktur kann sich der Ausleger von der Tragstruktur weg erstrecken. Insbesondere hat der Ausleger ein von der Tragstruktur abgewandtes freies Ende. Der Ausleger kann eine Länge von bis zu 2 mm, insbesondere eine Länge im Bereich von 100 µm bis 250 µm aufweisen. Vorzugsweise hat der Ausleger eine Breite von bis zu 0,5 mm, insbesondere eine Breite im Bereich von 20 µm bis 60 µm. Besonders bevorzugt hat der Ausleger eine Dicke von bis zu 30 µm, insbesondere eine Dicke im Bereich von 1 µm bis 3 µm. Mittels des Auslegers können eine horizontale und/oder eine transversale Geschwindigkeits- und/oder Anströmwinkelkomponente bestimmt werden. Insbesondere ist eine räumliche Auflösung im Bereich von 1 mm und/oder eine zeitliche Auflösung im Bereich von 1 kHz und/oder höher realisierbar. Insbesondere sind Geschwindigkeitskomponenten und/oder Winkelkomponenten auf Größenskalen unter 1 mm und/oder im Frequenzbereich von über 50 kHz bestimmbar.

Gemäß der Erfindung weist der Ausleger an einem freien Ende eine Anströmstruktur auf. Vorzugsweise hat der Ausleger und/oder die Anströmstruktur ein fluiddynamisches Profil. Hierdurch kann das Ansprechverhalten des Auslegers bezüglich einer Deformation, insbesondere einer Verbiegung und/oder Torsion, verbessert werden. Insbesondere ist das fluiddynamische Profil zum Realisieren eines dynamischen Auftriebes beim Umströmtwerden mittels des Fluids ausgebildet. Hierdurch kann auf einer von der Anströmfläche abgewandten Seite des Auslegers und/oder der Anströmstruktur eine Saugwirkung erreicht werden. Im Bereich der Anströmfläche kann eine Druckwirkung erreicht werden. Somit kann eine größere Kraft auf den Ausleger zum Deformieren des Auslegers wirken.

Der Ausleger weist eine erste Anströmfläche und die Anströmstruktur mindestens eine weitere Anströmfläche auf. Die Anströmstruktur kann eine Mehrzahl von weiteren Anströmflächen, insbesondere zwei, drei, vier oder mehr weitere Anströmflächen, aufweisen. Die mindestens eine weitere Anströmfläche erstreckt sich, ausgehend von der ersten Anströmfläche, weg. Insbesondere ist ein Abschnitt und/oder eine Ebene der ersten Anströmfläche des Auslegers schräg oder rechtwinklig zu einem Abschnitt, einer Ebene und/oder einer Tangente einer Krümmung der mindestens einen weiteren Anströmfläche der Anströmstruktur ausgerichtet. Hierdurch kann das Ansprechverhalten des Auslegers bezüglich einer Torsion des Auslegers aufgrund einer auf die erste Anströmfläche und/oder die mindestens eine weitere Anströmfläche wirkende Kraft der Strömung des Fluids verbessert werden.

Die Anströmstruktur kann aus einem Fotolack, vorzugsweise SU-8, hergestellt sein. Die Anströmstruktur kann eine Höhe von bis zu 0,5 mm, insbesondere eine Höhe im Bereich von 20 µm bis 60 µm, aufweisen. Vorzugsweise hat die Anströmstruktur eine Länge von bis zu 0,5 mm, insbesondere eine Länge im Bereich von 20 µm bis 60 µm. Besonders bevorzugt hat die Anströmstruktur eine Dicke von bis zu 50 µm, insbesondere eine Dicke im Bereich von 6 µm bis 12 µm.

Erfindungsgemäß ist die Anströmstruktur im Wesentlichen V-förmig ausgebildet. Hierbei kann die Anströmstruktur wahlweise zwei Schenkel aufweisen oder als eine keilartige Struktur ausgebildet sein. Der Ausleger hat eine erste Anströmfläche und die V-förmige Anströmstruktur erstreckt sich, ausgehend von der ersten Anströmfläche, weg. Insbesondere ist die Anströmstruktur der Hauptanströmrichtung des Fluids zugewandt. Vorzugsweise ist ein Abschnitt der Anströmfläche, eine erste Anströmfläche und/oder mindestens eine weitere Anströmfläche der Hauptanströmrichtung des Fluids zugewandt. Die V-förmige Anströmstruktur kann sich trichterartig in Richtung von der ersten Anströmrichtung weg öffnen. Alternativ kann die V-förmige Anströmstruktur eine Rampe, einen Keil, eine rampenartige und/oder keilartige von der ersten Anströmfläche weg gerichtete Spitze oder Nadel bilden.

Gemäß einer Weiterbildung weist die Messeinrichtung eine Strahlteiler-Platte und/oder eine Strahlteiler-Membran auf. Vorzugsweise ist ein entsprechender Strahlteiler in einem Strahlengang für einen Strahl eines Lasers angeordnet. Insbesondere dient ein derartiger Strahlteiler zum Ablenken und/oder Umlenken eines an der Reflektionsfläche reflektierten Strahls in Richtung eines Detektors. Vorzugsweise hat die Messeinrichtung einen, insbesondere zweidimensionalen, positionsempfindlichen Detektor zum Detektieren einer Position eines von dem Ausleger und/oder der Reflektionsfläche reflektierten Strahls des Lasers. Vorzugsweise ist der Strahlteiler als ein Pellicle-Strahlteiler ausgebildet. Mittels eines derartigen Strahlteilers lässt sich das sogenannte Ghosting vermeiden. Beim Ghosting entstehen unerwünschte Mehrfach-Reflektionen. Der positionsempfindliche Detektor bzw. positionssensitive Detektor (PSD) ermöglicht die Bestimmung des Auftreffpunktes des reflektierten Strahls auf einer zweidimensionalen Messfläche des Detektors. Aufgrund der Lage des Auftreffpunktes auf den Detektor lässt sich auf die Torsion und/oder Verbiegung des Auslegers schließen. Über diese Informationen kann auf die Geschwindigkeit, die Strömungsrichtung und/oder den Anströmwinkel des Fluids geschlossen werden.

Nach einer weiteren Ausführungsform des erfindungsgemäßen Verfahrens ergibt sich die Deformation des Auslegers aufgrund einer Verbiegung und/oder Torsion des Auslegers aufgrund der auf die mindestens eine Anströmfläche einwirkenden Kräfte der Strömung des Fluids. Hierbei kann die Geschwindigkeit als eine Funktion der Verbiegung und/oder die Strömungsrichtung, insbesondere ein Anströmwinkel, als eine Funktion der Torsion des Auslegers ausgewertet werden. Vorzugsweise wird hierbei ein Winkelbereich von +45° bis -45°, insbesondere von +90° bis -90°, in Bezug zur Hauptanströmrichtung des Fluids abgedeckt.

Von besonderem Vorteil ist eine erfindungsgemäße Vorrichtung und/oder ein erfindungsgemäßes Verfahren zum Bestimmen mindestens eines Parameters einer Strömung eines Fluids, insbesondere einer Geschwindigkeit und/oder einer Strömungsrichtung des Fluids. Vorzugsweise ist eine longitudinale und/oder eine transversale Geschwindigkeitskomponente bestimmbar. Hierbei kann die longitudinale Geschwindigkeitskomponente parallel zur Hauptanströmrichtung des Fluids ausgerichtet sein und/oder einer Geschwindigkeitskomponente in Hautanströmrichtung entsprechen. Die transversale Geschwindigkeitskomponente kann quer, insbesondere rechtwinklig, zur longitudinalen Geschwindigkeitskomponente und/oder zur Hauptanströmrichtung ausgerichtet sein. Insbesondere ist eine zweidimensionale Messung des mindestens einen zu bestimmenden Parameters ermöglicht. Das Fluid kann ein Gas oder eine Flüssigkeit sein. Insbesondere ist das Fluid Luft, Wasser oder ein Luft-Wasser-Gemisch. Insbesondere ist die Vorrichtung als ein Cantilever-Anemometer, vorzugsweise als ein zweidimensionales Laser-Cantilever-Anemometer (2d-LCA), ausgebildet. Die erfindungsgemäße Vorrichtung und/oder das erfindungsgemäße Verfahren kann in der Forschung, der Luft- und/oder Raumfahrt, der Windenergie, der Medizin und/oder im Zusammenhang mit Misch- und/oder Verbrennungsprozessen verwendet werden.

Nachfolgend wird die Erfindung anhand der Figuren näher erläutert. Es zeigen:
- Fig. 1: eine schematische perspektivische Teilansicht einer erfindungsgemäßen Vorrichtung,
- Fig. 2: eine schematische Seitenansicht eines Sensorelementes für eine erfindungsgemäße Vorrichtung gemäß Fig. 1,
- Fig. 3: eine schematische perspektivische Seitenansicht eines Auslegers,
- Fig. 4: eine schematische perspektivische Seitenansicht einer ersten Ausführungsform eines Auslegers für eine erfindungsgemäße Vorrichtung,
- Fig. 5: eine schematische perspektivische Seitenansicht einer zweiten Ausführungsform eines Auslegers für eine erfindungsgemäße Vorrichtung,
- Fig. 6: eine schematische perspektivische Seitenansicht einer weiteren Ausführungsform eines Auslegers für eine erfindungsgemäße Vorrichtung, und
- Fig. 7: eine schematische Draufsicht auf einen Strahlengang einer erfindungsgemäßen Vorrichtung.

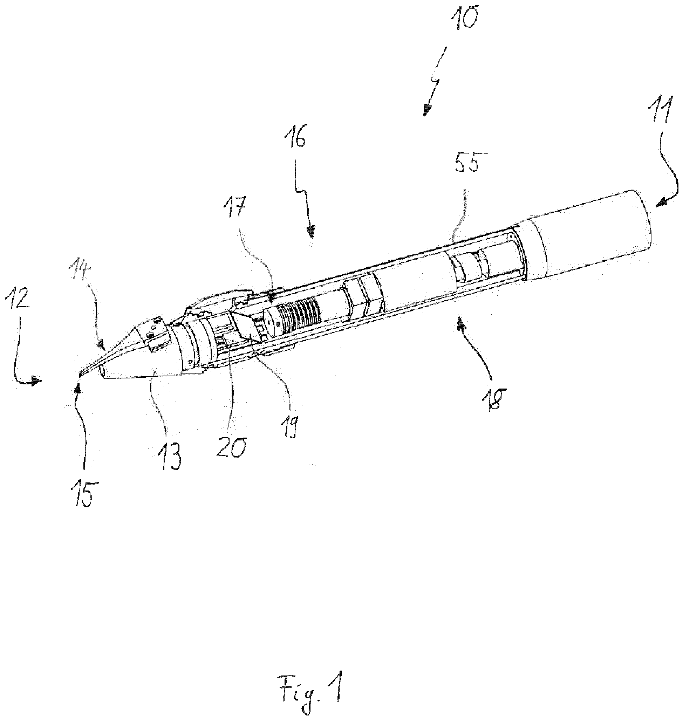

Fig. 1 zeigt eine schematische perspektivische Teilansicht einer erfindungsgemäßen Vorrichtung 10. Gemäß dieser Teilansicht ist ein Gehäuse 55 der Vorrichtung 10 teilweise geöffnet bzw. entfernt, so dass ein Innenaufbau der Vorrichtung 10, der üblicherweise von dem hier nicht geschlossen dargestellten Gehäuse 55 umgeben ist, erkennbar ist.

Die Vorrichtung 10 weist bei diesem Ausführungsbeispiel eine im Wesentlichen längliche bzw. langgestreckte, insbesondere stiftartige, Gestalt auf. Die Vorrichtung 10 hat ein hinteres Ende 11 und ein vorderes Ende 12. Das vordere Ende 12 weist eine konische Gehäusespitze 13 auf. Die konische Gehäusespitze 13 hat einen sich in Richtung des hinteren Endes 11 öffnenden Winkel, der bei diesem Ausführungsbeispiel etwa 24° beträgt. Die Gehäusespitze 13 weist eine am Außenumfang befestigte stabartige Tragstruktur 14 auf, die über das in Richtung des vorderen Endes 12 zulaufende Ende der Gehäusespitze 13 übersteht. An einem freien Ende der Tragstruktur 14, das in eine Richtung von dem hinteren Ende 11 abgewandt über die Gehäusespitze 13 hinaus steht, ist ein Sensorelement 15 angeordnet. Das Sensorelement 15 hat einen hier nicht näher erkennbaren elastisch deformierbaren Ausleger, der im Zusammenhang mit den nachfolgenden Figuren noch näher gezeigt und erläutert wird

Zwischen einem von der Tragstruktur 14 bzw. dem Sensorelement 15 abgewandten Ende der Gehäusespitze 13 und dem hinteren Ende 11 ist eine Messeinrichtung 16 zum Messen der Deformation des Auslegers des Sensorelementes 15 angeordnet. Die Messeinrichtung 16 weist einen Laser 17 auf, der bei diesem Ausführungsbeispiel in einem mittleren Bereich der Vorrichtung 10 angeordnet ist. Hier ist der Laser 17 beispielhaft als eine Laserdiode des Typs ADL-63054TA2 mit einer Wellenlänge von 630 nm und einer Leistung von 5 mW.

Zwischen dem hinteren Ende 11 der Vorrichtung 10 und dem Laser 17 ist eine Positionierungseinrichtung 18 zum Positionieren bzw. Justieren des Lasers 17 angeordnet. Bei diesem Ausführungsbeispiel ist der Laser 17 mittels der Positionierungseinrichtung 18 und einer hier nicht näher dargestellten Fernsteuerung einstellbar, wodurch ein Öffnen des Gehäuses 55 der Vorrichtung 10 vermeidbar ist. Gemäß diesem Ausführungsbeispiel hat die Positionierungseinrichtung 18 zum Positionieren bzw. Justieren des Lasers 17 zwei Gleichstrom-Motoren.

Zwischen dem Laser 17, der hinsichtlich seines hier nicht näher dargestellten Laserstrahls derart ausgerichtet ist, dass der Laserstrahl auf den Ausleger des Sensorelementes 15 trifft, und der Gehäusespitze 13 ist ein Strahlteiler 19 und ein positionsempfindlicher Detektor 20 angeordnet. Der positionsempfindliche Detektor 20 ist hier als ein zweidimensionales Element, nämlich als ein sogenannter zweidimensionaler positions-sensitiver Detektor (PSD), ausgebildet. Hier ist beispielhaft ein Detektor 20 vom Typ Hamamatsu S5990 verbaut.

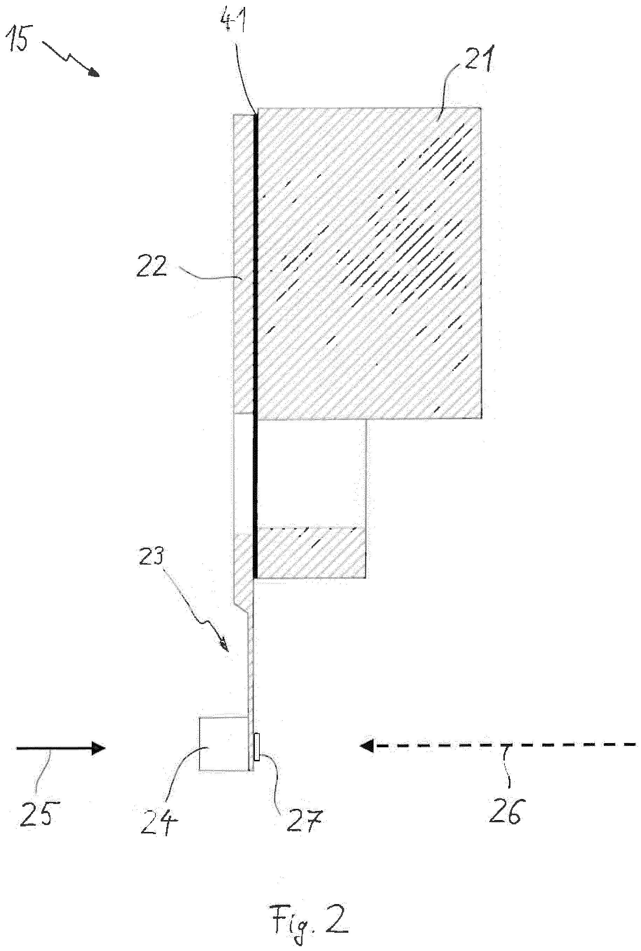

Fig. 2 zeigt eine schematische Seitenansicht des Sensorelementes 15 für die erfindungsgemäße Vorrichtung 10 gemäß Figur 1. Das Sensorelement 15 weist ein Basiselement 21, ein Tragelement 22 und einen elastisch deformierbaren Ausleger 23 auf.

Das Sensorelement 15 ist bei diesem Ausführungsbeispiel als ein Cantilever-Chip ausgebildet. Das Sensorelement 15 ist aus Silizium, hier beispielhaft mittels eines Fotolithografie-Verfahrens, hergestellt. Das Basiselement 21 dient zum Befestigen des Sensorelementes 15 an dem freien Ende der Tragstruktur 14 gemäß Figur 1. Das Basiselement 21 und das Tragelement 22 sind mittels einer Trennschicht 41 voneinander getrennt. Bei diesem Ausführungsbeispiel ist die Trennschicht 41 aus Silizium-Oxid gebildet und hat eine Dicke von 1 µm.

Das Tragelement 22 erstreckt sich an einer Seite des Basiselementes 21 über das Basiselement 21 hinaus. An einem von dem Basiselement 21 abgewandten Ende des Tragelementes 22 ist der Ausleger 23 an dem Tragelement 22 befestigt. Der Ausleger 23 ist bei diesem Ausführungsbeispiel im Wesentlichen stabartig ausgebildet und erstreckt sich ausgehend von dem Tragelement 22 von diesem und dem Basiselement 21 weg. Der Ausleger 23 ist als ein sogenannter Cantilever ausgebildet. Bei diesem Ausführungsbeispiel hat der Ausleger 23 eine Länge von 160 µm. Die Breite des Auslegers 23 beträgt hier beispielshaft 40 µm und die Dicke 1,6 µm.

Der Ausleger 23 weist an einem freien Ende eine Anströmstruktur 24 auf. Der Ausleger 23 und die Anströmstruktur 24 werden gemäß dem Pfeil 25 von einem hier nicht näher dargestellten Fluid angeströmt. Hierbei repräsentiert der Pfeil 25 eine Hauptanströmrichtung des Fluids. Die Hauptanströmrichtung gemäß Pfeil 25 ist bei diesem Ausführungsbeispiel rechtwinklig zur Längsausrichtung des Auslegers 23 ausgerichtet. Ein Strahl 26 des Lasers 17 gemäß Figur 1 ist auf eine von der Anströmstruktur 24 abgewandte Seite des Auslegers 23 gerichtet. Des Weiteren ist die Hauptanströmrichtung gemäß Pfeil 25 gemäß diesem Beispiel in derselben Ebene wie der Strahl 26 angeordnet. Bei diesem Ausführungsbeispiel befinden sich der Strahl 26 und die Hauptanströmrichtung gemäß Pfeil 25 auf derselben Achse und sind aufeinander zu gerichtet.

Der Ausleger 23 weist auf einer von der Anströmstruktur 24 abgewandten Seite eine Reflektionsfläche 27 zum Reflektieren des Strahls 26 auf. Die Reflektionsfläche 27 ist bei diesem Ausführungsbeispiel aus einer Schicht Aluminium gebildet.

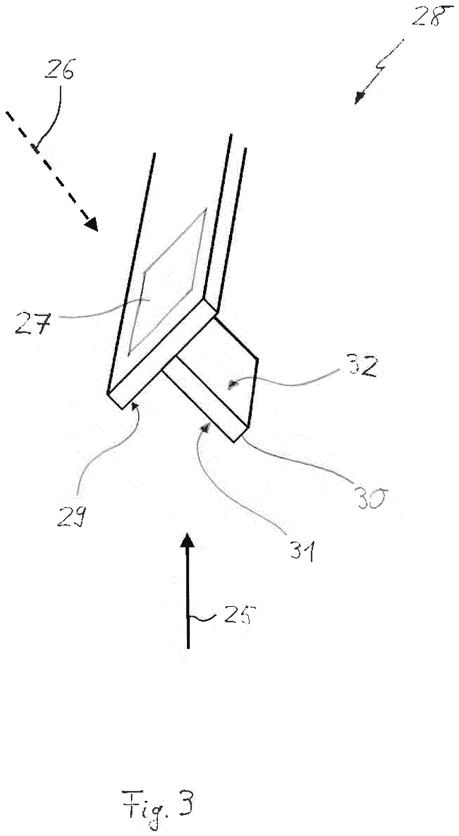

Fig. 3 zeigt eine schematische perspektivische Seitenansicht einer nicht unter den Gegenstand der Erfindung fallenden Ausführungsform eines Auslegers 28. Beispielsweise ist der Ausleger 28 anstelle des Auslegers 23 gemäß Figur 2 einsetzbar. Der elastische deformierbare Ausleger 28 hat eine im Wesentlichen plattenartige Ausbildung, deren Ausmaße bei diesem Ausführungsbeispiel dem des Auslegers 23 gemäß Figur 2 entsprechen. Der Ausleger 28 hat eine erste Anströmfläche 29, die bei der Benutzung des Auslegers 28 einer Strömung eines Fluids gemäß Pfeil 25 zugewandt ist.

Des Weiteren hat der Ausleger 28 eine Anströmstruktur 30, die im Bereich des freien Endes des Auslegers 28 an diesem befestigt ist. Die Anströmstruktur 30 erstreckt sich ausgehend von der ersten Anströmfläche 29 weg. Die erste Anströmfläche 29 und die Anströmstruktur 30 sind auf einer von der Reflektionsfläche 27 abgewandten Seite des Auslegers 28 angeordnet. Bei diesem Ausführungsbeispiel ist die Anströmstruktur 30 als ein plattenartiges Element mit einer Höhe von 30 µm, einer Länge von 40 µm und einer Dicke von 9 µm ausgebildet. Hier ist die Anströmstruktur 30 beispielhaft aus dem Fotolack SU-8 gebildet. Die Anströmstruktur 30 erstreckt sich in einem rechten Winkel zu der ersten Anströmfläche 29. Die Anströmstruktur 30 ist etwa mittig zur Breite der ersten Anströmfläche 29 an dieser angeordnet.

Die erste Anströmstruktur 30 stellt mehrere weitere Anströmflächen 31, 32 bereit. Hier sind die beiden weiteren Anströmflächen 31, 32 auf zwei voneinander abgewandten Seiten der Anströmstruktur 30 angeordnet. Die Ebenen der beiden weiteren Anströmflächen 31, 32 sind parallel zueinander ausgerichtet. Des Weiteren sind die Ebenen der beiden weiteren Anströmflächen 31, 32 rechtwinkelig zu der Ebene der ersten Anströmfläche 29 ausgerichtet.

Des Weiteren ist der Ausleger 28 bzw. die erste Anströmfläche 29 derart ausgerichtet, dass die weitere Anströmfläche 31 hier als eine zweite Anströmfläche für das Fluid dient. Hierbei ist die zweite Anströmfläche 31 schräg und bei diesem Ausführungsbeispiel mit einem Winkel von etwa 45° zur Hauptanströmrichtung des Fluids gemäß Pfeil 25 ausgerichtet. Bei diesem Ausführungsbeispiel entspricht die Strömung des Fluids gemäß Pfeil 25 der Hauptanströmrichtung, wobei die Hauptanströmrichtung gemäß Pfeil 25 bei diesem Ausführungsbeispiel in einer Ebene liegt, die rechtwinklig zu den Ebenen der ersten Anströmfläche 29 und der weiteren Anströmflächen 31, 32 ausgerichtet ist.

Alternativ zu der Darstellung in Figur 3 kann der Ausleger 28 um seine Längsachse um 90° im Uhrzeigersinn gedreht angeordnet sein. In diesem Fall dient die weitere Anströmfläche 32 als die zweite Anströmfläche für das Fluid.

Die Ebene der ersten Anströmfläche 29 ist schräg zu der Hauptanströmrichtung gemäß dem Pfeil 25 des hier nicht näher dargestellten Fluids ausgerichtet. Hierzu ist die Vorrichtung 10 gemäß Figur 1 bzw. der Strahl 26 des Lasers 17 schräg zur Hauptanströmrichtung gemäß Pfeil 25 ausgerichtet. Bei diesem Ausführungsbeispiel ist die Ebene der ersten Anströmfläche 29 bzw. die Strahlachse des Lasers 27 gemäß Pfeil 26 mit einem Winkel von etwa 45° zur Hauptanströmrichtung des Fluids gemäß Pfeil 25 ausgerichtet. Des Weiteren erstrecken sich die Ebenen der weiteren Anströmflächen 31, 32 parallel zur Längsachse des Auslegers 28.

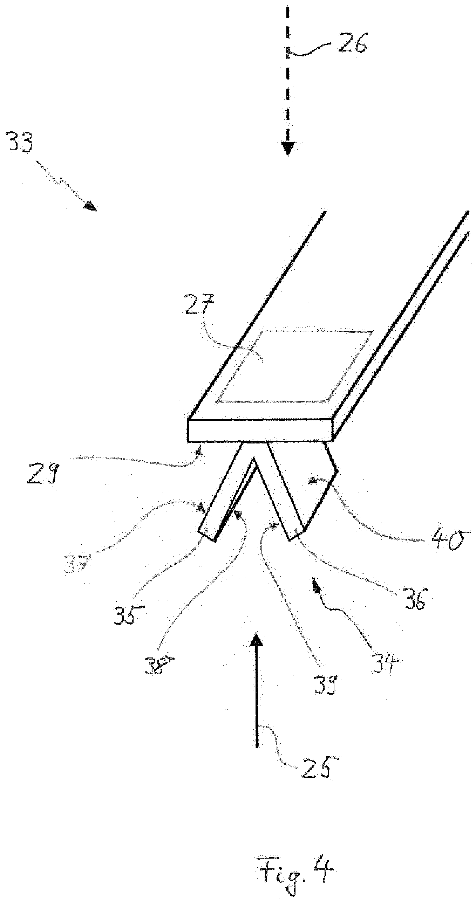

Fig. 4 zeigt eine schematische perspektivische Seitenansicht einer ersten Ausführungsform eines Auslegers 33 für eine erfindungsgemäße Vorrichtung 10. Der Ausleger 33 entspricht hinsichtlich seines Aufbaus und seiner Ausmaße weitgehend dem Ausleger 28 bzw. dem Ausleger 23. So hat der Ausleger 33 ebenfalls eine erste Anströmfläche 29 und auf einer von der ersten Anströmfläche 29 abgewandten Seite die Reflektionsfläche 27.

Abweichend von dem Ausleger 28 gemäß Fig. 3 weist der Ausleger 33 im Bereich seines freien Endes eine Anströmstruktur 34 auf. Die Anströmstruktur 34 ist im Wesentlichen V-förmig ausgebildet. Die Anströmstruktur 34 ist etwa mittig an der ersten Anströmfläche 29 befestigt und erstreckt sich von der ersten Anströmfläche 29 weg. Die Anströmstruktur 34 hat einen ersten Schenkel 35 und einen zweiten Schenkel 36. Ausgehend von der ersten Anströmfläche 29 erstrecken sich die beiden Schenkel 35, 36 voneinander weg. Der erste Schenkel 35 hat zwei weitere Anströmflächen 37, 38 auf zwei voneinander abgewandten Seiten des ersten Schenkels 35. Der zweite Schenkel 36 hat zwei weitere Anströmflächen 39, 40, die auf zwei voneinander abgewandten Seiten des zweiten Schenkels 36 angeordnet sind. Die beiden weiteren Anströmflächen 37 und 38 sowie die beiden weiteren Anströmflächen 39 und 40 sind jeweils parallel zueinander ausgerichtet. Des Weiteren sind die weiteren Anströmflächen 38 und 39 einander zugewandt. Die weiteren Anströmflächen 37 und 40 sind voneinander abgewandt. Bei diesem Ausführungsbeispiel sind die Schenkel 35, 36 in einem Winkel von etwa 45° zueinander ausgerichtet. Alternativ ist ein anderer Winkel denkbar, beispielsweise im Bereich von 30° bis 90 ° oder 120°. Ausgehend von der ersten Anströmfläche 29 und sich von dieser weg erstreckend öffnen sich die Schenkel 35, 36 trichterartig. Des Weiteren sind die Schenkel 35, 36 bei diesem Beispiel in einem Winkel von etwa 45° zu der Ebene der ersten Anströmfläche 29 ausgerichtet.

Die Ebene der ersten Anströmfläche 29 ist rechtwinklig zur Hauptanströmrichtung des Fluids gemäß Pfeil 25 ausgerichtet ist. Des Weiteren ist der Strahl 26 des Lasers 27 ebenfalls rechtwinklig zur Ebene der ersten Anströmfläche 29 des Auslegers 33 ausgerichtet. Im Unterschied hierzu sind die weiteren Anströmflächen 37, 38, 39, 40 der Anströmstruktur 34 schräg zur Ebene der ersten Anströmfläche 29 und damit schräg zur Hauptanströmrichtung des Fluids gemäß Pfeil 25 sowie schräg zum Strahl 26 des Lasers 27 ausgerichtet. Bei diesem Ausführungsbeispiel sind die Ebenen der weiteren Anströmflächen 37, 38, 39, 40 mit einem Winkel von etwa 45° zur Hauptanströmrichtung des Fluids gemäß Pfeil 25 bzw. zum Strahl 26 des Lasers 27 ausgerichtet. Des Weiteren erstrecken sich die Ebenen der weiteren Anströmflächen 37, 38, 39, 40 parallel zur Längsachse des Auslegers 33. Die Hauptanströmrichtung gemäß Pfeil 25 liegt bei diesem Ausführungsbeispiel in einer Ebene, die rechtwinklig zu den Ebenen der ersten Anströmfläche 29 und der weiteren Anströmflächen 37, 38, 39, 40 ausgerichtet ist.

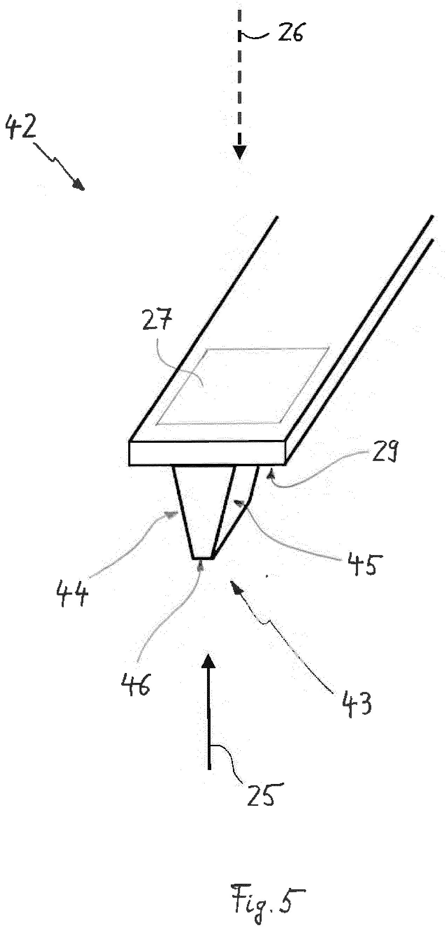

Fig. 5 zeigt eine schematische perspektivische Seitenansicht einer zweiten Ausführungsform eines Auslegers 42 für eine erfindungsgemäße Vorrichtung 10. Der Ausleger 42 entspricht hinsichtlich seines Aufbaus und seiner Ausmaße weitgehend den Auslegern 23, 28, 33. So hat der Ausleger 42 ebenfalls eine erste Anströmfläche 29 und auf einer von der ersten Anströmfläche 29 abgewandten Seite die Reflektionsfläche 27.

Abweichend von den Auslegern 23, 28, 33 weist der Ausleger 42 im Bereich seines freien Endes eine Anströmstruktur 43 auf. Die Anströmstruktur 43 ist hinsichtlich seiner Außenkontur im Wesentlichen V-förmig bzw. trichterartig ausgebildet. Allerdings weist die Anströmstruktur 43 keine Schenkel auf, sondern ist bei diesem Ausführungsbeispiel aus einem Vollmaterial gebildet. Die Anströmstruktur 43 ist etwa mittig an der ersten Anströmfläche 29 befestigt und erstreckt sich von der ersten Anströmfläche 29 weg

Die Anströmstruktur 43 hat zwei weitere Anströmflächen 44, 45 auf zwei voneinander abgewandten Seiten der Anströmstruktur 43. Die weiteren Anströmflächen 44 und 45 sind voneinander abgewandt. Bei diesem Ausführungsbeispiel sind die beiden Anströmflächen 44, 45 in einem Winkel von etwa 105° zur Ebene der ersten Anströmfläche 29 ausgerichtet. Ausgehend von der ersten Anströmfläche 29 und sich von dieser weg erstreckend laufen die weiteren Anströmflächen 44, 45 trichterartig oder rampenartig aufeinander zu. Bei diesem Ausführungsbeispiel laufen die weiteren Anströmflächen 44, 45 nicht in eine gemeinsame Kante zusammen, sondern die weiteren Anströmfläche 44, 45 laufen ausgehend von der ersten Anströmfläche 29 aufeinander zu und enden in einer dritten weiteren Anströmfläche 46. Die dritte weitere Anströmfläche 46 ist von der ersten Anströmfläche 29 abgewandt. Die Ebene der dritten weiteren Anströmfläche 46 ist parallel zur Ebene der ersten Anströmfläche 29 ausgerichtet. Alternativ können die weiteren Anströmflächen 44, 45 anstelle der dritten weiteren Anströmfläche 46 in eine gemeinsame Kante zusammen laufen.

Die Ebene der ersten Anströmfläche 29 ist rechtwinklig zur Hauptanströmrichtung des Fluids gemäß Pfeil 25 ausgerichtet ist. Des Weiteren ist der Strahl 26 des Lasers 27 ebenfalls rechtwinklig zur Ebene der ersten Anströmfläche 29 des Auslegers 42 ausgerichtet. Im Unterschied hierzu sind die weiteren Anströmflächen 44, 45 der Anströmstruktur 43 schräg zur Ebene der ersten Anströmfläche 29 und damit schräg zur Hauptanströmrichtung des Fluids gemäß Pfeil 25 sowie schräg zum Strahl 26 des Lasers 27 ausgerichtet. Bei diesem Ausführungsbeispiel sind die Ebenen der weiteren Anströmflächen 44, 45 mit einem Winkel von etwa 15° zur Hauptanströmrichtung des Fluids gemäß Pfeil 25 bzw. zum Strahl 26 des Lasers 27 ausgerichtet. Des Weiteren erstrecken sich die Ebenen der weiteren Anströmflächen 44, 45 parallel zur Längsachse des Auslegers 42. Die Hauptanströmrichtung gemäß Pfeil 25 liegt bei diesem Ausführungsbeispiel in einer Ebene, die rechtwinklig zu den Ebenen der ersten Anströmfläche 29 und der weiteren Anströmflächen 44, 45 ausgerichtet ist.

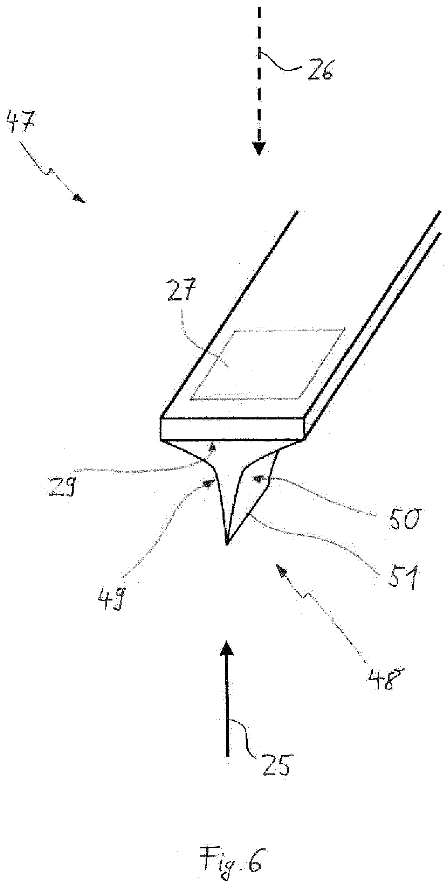

Fig. 6 zeigt eine schematische perspektivische Seitenansicht einer weiteren Ausführungsform eines Auslegers 47 für eine erfindungsgemäße Vorrichtung 10. Der Ausleger 47 entspricht hinsichtlich seines Aufbaus und seiner Ausmaße weitgehend den Auslegern 23, 28, 33, 42. So hat der Ausleger 47 ebenfalls eine erste Anströmfläche 29 und auf einer von der ersten Anströmfläche 29 abgewandten Seite die Reflektionsfläche 27.

Abweichend von den Auslegern 23, 28, 33, 42 weist der Ausleger 47 im Bereich seines freien Endes eine Anströmstruktur 48 auf. Die Anströmstruktur 48 ist hinsichtlich seiner Außenkontur im Wesentlichen V-artig bzw. trichterartig ausgebildet. Allerdings weist die Anströmstruktur 43 keine Schenkel auf, sondern ist bei diesem Ausführungsbeispiel aus einem Vollmaterial gebildet. Die Anströmstruktur 48 ist etwa mittig an der ersten Anströmfläche 29 befestigt und erstreckt sich von der ersten Anströmfläche 29 weg

Die Anströmstruktur 48 hat zwei weitere Anströmflächen 49, 50 auf zwei voneinander abgewandten Seiten der Anströmstruktur 48. Die weiteren Anströmflächen 49 und 50 sind voneinander abgewandt. Bei diesem Ausführungsbeispiel sind die beiden Anströmflächen 49, 50 gekrümmt ausgebildet. Ausgehend von der ersten Anströmfläche 29 und sich von dieser weg erstreckend laufen die weiteren gekrümmten Anströmflächen 49, 50 trichterartig oder rampenartig aufeinander zu. Bei diesem Ausführungsbeispiel laufen die weiteren Anströmflächen 49, 50 in eine gemeinsame Anströmkante 51 zusammen. Die Anströmkante 51 erstreckt sich in Längsrichtung des Auslegers 48. Des Weiteren erstrecken sich die gekrümmten weiteren Anströmflächen 49, 50 ausgehend von der Anströmkante 51 bis zu äußeren Endkanten der ersten Anströmfläche 29. Somit ist die erste Anströmfläche 29 im Bereich der Anströmstruktur 48 vollständig von diesem bedeckt. Alternativ kann die Anströmstruktur 48 auch eine geringere oder größere Breite als die erste Anströmfläche 29 aufweisen.

Die Ebene der ersten Anströmfläche 29 ist rechtwinklig zur Hauptanströmrichtung des Fluids gemäß Pfeil 25 ausgerichtet ist. Des Weiteren ist der Strahl 26 des Lasers 27 ebenfalls rechtwinklig zur Ebene der ersten Anströmfläche 29 des Auslegers 47 ausgerichtet. Im Unterschied hierzu sind mindestens teilweise Tangenten der gekrümmten weiteren Anströmflächen 49, 50 der Anströmstruktur 48 schräg zur Ebene der ersten Anströmfläche 29 und damit schräg zur Hauptanströmrichtung des Fluids gemäß Pfeil 25 sowie schräg zum Strahl 26 des Lasers 27 ausgerichtet. Die gekrümmten weiteren Anströmflächen 49, 50 erstrecken sich parallel zur Längsachse des Auslegers 47. Die Hauptanströmrichtung gemäß Pfeil 25 liegt bei diesem Ausführungsbeispiel in einer Ebene, die rechtwinklig zu den Ebenen der ersten Anströmfläche 29 und den gekrümmten Flächen der weiteren Anströmflächen 49, 50 ausgerichtet ist.

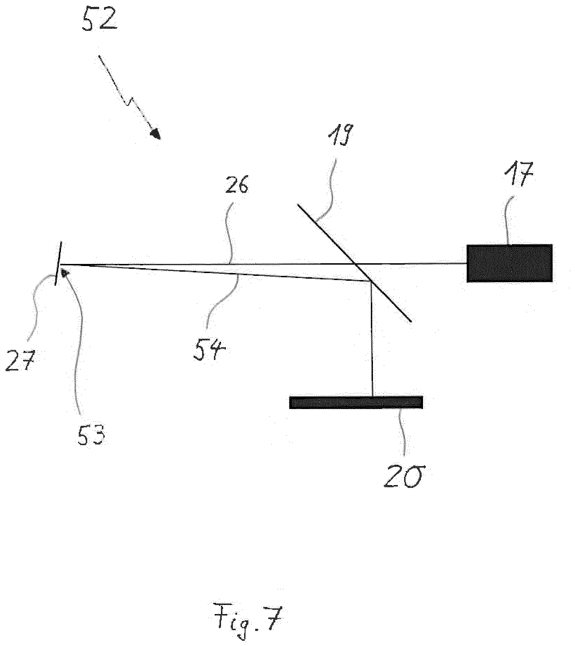

Fig. 7 zeigt eine schematische Draufsicht auf einen Strahlengang 52 einer erfindungsgemäßen Vorrichtung 10. Der Strahl 26 des Lasers 17 erstreckt sich in Längsrichtung der Vorrichtung 10 gemäß Figur 1. Hierbei durchläuft zumindest ein Teil des Strahls 26 den Strahlteiler 19. Bei diesem Ausführungsbeispiel ist der Strahlteiler 19 als eine Strahlteiler-Membran, nämlich als ein sogenannter Pellicle-Strahlteiler, ausgebildet. Im Gegensatz zu einem ebenfalls denkbaren Strahlteiler-Würfel ist durch die Verwendung einer Strahlteiler-Membran ein geringerer Bauraum notwendig.

Der Strahl 26 trifft auf die Reflektionsfläche 27 eines hier nicht näher dargestellten Auslegers 23, 28, 33, 42, 47. Auf der Reflektionsfläche 27 entsteht ein Reflektionspunkt 53, der gemäß dem Reflektionsstrahl 54 in Richtung des Strahlteilers 19 reflektiert wird. Bei einem unbelasteten Ausleger 23, 28, 33, 42, 47 ist die Ebene der Reflektionsfläche 27 in einem rechten Winkel zum Strahl 26 ausgerichtet. Bei einer aufgrund einer Fluidströmung auf den Ausleger 23, 28, 33, 42, 47 wirkenden Kraft, wird der Ausleger 23, 28, 33, 42, 47 ausgelenkt und die Reflektionsfläche 27 ist schräg zur Längsachse des Strahls 26 ausgerichtet, wie in Figur 7 beispielhaft dargestellt.

Der Reflektionsstrahl 54 ist ausgehend von der Reflektionsfläche 27 in Richtung des Strahlteilers 19 gerichtet. Eine Ebene des Strahlteilers 19 ist schräg zur Längsachse des Strahls 26 ausgerichtet. Bei diesem Ausführungsbeispiel ist die Ebene des Strahlteiles 19 in einem Winkel von 45° zum Strahl 26 ausgerichtet.

Der auf den Strahlteiler 19 auftreffende Reflektionsstrahl 54 wird zumindest teilweise mittels des Strahlteilers 19 in Richtung auf den Detektor 20 abgelenkt. Hier wird der Reflektionsstrahl 54 mittels des Strahlteilers 19 um 90° zur Längsachse des Reflektionsstrahl 54 zwischen der Reflektionsfläche 27 und dem Strahlteiler 19 umgelenkt. Sodann trifft der umgelenkte Reflektionsstrahl 54 auf den Detektor 20.

Bei diesem Ausführungsbeispiel ist eine Ebene des zweidimensionalen Detektors 20 rechtwinklig zur Längsachse der Reflektionsstrahls zwischen dem Strahlteiler 19 und dem Detektor 20 bzw. parallel zur Längsachse des Strahl 26 ausgerichtet.

Aufgrund der Ausbildung des Strahlteilers 19 als eine Strahlteiler-Membran, hier als ein Pellicle-Strahlteiler, ist das sogenannte Ghosting erheblich reduzierbar oder vollständig vermeidbar. Beispielsweise bei Verwendung eines Strahlteiler-Würfels kommt es beim Ghosting zu unerwünschten Mehrfach-Reflektionen, die eine eindeutige Bestimmung des Auftreffpunktes des Reflektionsstrahls 54 auf dem Detektor 20 erschwert.

Nachfolgend wird die Funktionsweise der erfindungsgemäßen Vorrichtung anhand der Fig. 1 bis 7 näher erläutert:
Zum Bestimmen eines Parameters einer Strömung eines Fluids, beispielsweise einer Geschwindigkeit und/oder einer Strömungsrichtung eines Gases oder einer Flüssigkeit, ist die Vorrichtung 10 einsetzbar. Beispielsweise wird die Vorrichtung 10 bzw. der Ausleger 23, 28, 33, 42, 47 als ein Anemometer eingesetzt. Hierzu wird der Ausleger 23, 28, 33, 42, 47 der Strömung des Fluids ausgesetzt. Die Strömung des Fluids trifft auf die Anströmflächen 29, 31, 32, 37, 38, 39, 40, 44, 45, 46, 49, 50 wodurch auf den Ausleger 23, 28, 33, 42, 47 durch das sich bewegende Fluid eine Kraft wirkt, die zu einer Deformation des Auslegers 23, 28, 33, 42, 47 führt. Insbesondere handelt es sich bei der Deformation um eine Verbiegung und/oder Torsion des Auslegers 23, 28, 33, 42, 47. In einer solchen Deformation des Auslegers 23, 28, 33, 42, 47 sind die gewünschten Informationen über Geschwindigkeit und Anströmwinkel enthalten. Diese Informationen können mittels bekannter Methoden ermittelt werden.

Gemäß dem vorliegenden Ausführungsbeispiel wird ein Strahl 26 eines Lasers 17 im Bereich eines freien Endes des Auslegers 23, 28, 33, 42, 47 fokussiert, der die Reflektionsfläche 27 aufweist. Der auf der Reflektionsfläche 27 reflektierte Reflektionspunkt 53 des Lasers 17 bewegt sich in Abhängigkeit von der Deformation des Auslegers 23, 28, 33, 42, 47. Dieser sich bewegende und gemäß dem Reflektionsstrahl 54 reflektierte Reflektionspunkt 53 ist mittels des Detektors 20 detektierbar. Hierbei stellt der Detektor 20 eine zweidimensionale Messfläche bereit, um verschiedene Positionen des reflektierten Reflektionspunktes 53 detektieren zu können. Die Position des Reflektionspunktes 53 bzw. des auf dem Detektor 20 hinsichtlich seiner Position bestimmten Reflektionsstrahl 54 enthält die notwendigen Informationen, die nachfolgend zum Bestimmen der Geschwindigkeit und/oder der Strömungsrichtung des Fluids ausgewertet werden.

Mindestens ein Abschnitt der Anströmfläche 29, 31, 32, 37, 38, 39, 40, 44, 45, 46, 49, 50 ist hierbei schräg oder gekrümmt zu einer Hauptanströmrichtung des Fluids gemäß Pfeil 25 ausgerichtet. Hierdurch lässt sich eine höhere Winkelauflösung bei der Bestimmung der Strömungsrichtung des Fluids erreichen. Hierbei ist die Hauptanströmrichtung des Fluids als eine mittlere und/oder durchschnittliche Strömungsrichtung des Fluids, vorzugsweise mit einem Anströmwinkel von 0° in Bezug zum Strahl 26 und in einem unbelasteten Zustand des Auslegers 23, 28, 33, 42, 47, vorgegeben. Insbesondere sind die zu bestimmenden Strömungsrichtungen und/oder Anströmwinkel des Fluids in Bezug zur Anströmfläche 29, 31, 32, 37, 38, 39, 40, 44, 45, 46, 49, 50 um die Hauptanströmrichtung des Fluids verteilt angeordnet.

Somit sind mit der erfindungsgemäßen Vorrichtung hoch aufgelöste Messungen der Geschwindigkeit und/oder einer Strömungsrichtung eines Fluids in zwei Dimensionen, beispielsweise auf Größenskalen unter einem Millimeter, insbesondere im Bereich von etwa 140 µm bis 160 µm, und in einem Winkelbereich bis zu 180° möglich.

**Bezugszeichenliste:**

| | | | |
|---|---|---|---|
| 10 | Vorrichtung | 49 | Anströmfläche |
| 11 | hinteres Ende | 50 | Anströmfläche |
| 12 | vorderes Ende | 51 | Anströmkante |
| 13 | Gehäusespitze | 52 | Strahlgang |
| 14 | Tragstruktur | 53 | Reflektionspunkt |
| 15 | Sensorelement | 54 | Reflektionsstrahl |
| 16 | Messeinrichtung | 55 | Gehäuse |
| 17 | Laser | | |
| 18 | Positionierungseinrichtung | | |
| 19 | Strahlteiler | | |
| 20 | Detektor | | |
| 21 | Basiselement | | |
| 22 | Tragelement | | |
| 23 | Ausleger | | |
| 24 | Anströmstruktur | | |
| 25 | Pfeil | | |
| 26 | Strahl | | |
| 27 | Reflektionsfläche | | |
| 28 | Ausleger | | |
| 29 | Anströmfläche | | |
| 30 | Anströmstruktur | | |
| 31 | Anströmfläche | | |
| 32 | Anströmfläche | | |
| 33 | Ausleger | | |
| 34 | Anströmstruktur | | |
| 35 | Schenkel | | |
| 36 | Schenkel | | |
| 37 | Anströmfläche | | |
| 38 | Anströmfläche | | |
| 39 | Anströmfläche | | |
| 40 | Anströmfläche | | |
| 41 | Trennschicht | | |
| 42 | Ausleger | | |
| 43 | Anströmstruktur | | |
| 44 | Anströmfläche | | |
| 45 | Anströmfläche | | |
| 46 | Anströmfläche | | |
| 47 | Ausleger | | |
| 48 | Anströmstruktur | | |

## Patentansprüche

1. Vorrichtung zum Bestimmen mindestens eines Parameters einer Strömung eines Fluids mit einem elastisch deformierbaren Ausleger (23, 28, 33, 42, 47), der mindestens eine Anströmfläche (29, 31, 32, 37, 38, 39, 40, 44, 45, 46, 49, 50) für das Fluid hat, und mit einer Messeinrichtung (16) zum Messen der Deformation des Auslegers (23, 28, 33, 42, 47), wobei mindestens ein Abschnitt der Anströmfläche (29, 31, 32, 37, 38, 39, 40, 44, 45, 46, 49, 50) schräg und/oder gekrümmt zu einer Hauptanströmrichtung (25) des Fluids ausgerichtet ist, wobei der Ausleger (23, 28, 33, 42, 47) auf einer von der Anströmfläche (29) abgewandten Seite eine Reflektionsfläche (27) und die Messeinrichtung (16) einen Laser (17) aufweist und eine Strahlachse (26) des Lasers (17) auf die Reflexionsfläche (27) des Auslegers (23, 28, 33, 42, 47) gerichtet ist, und wobei der Ausleger (23, 28, 33, 42, 47) eine erste Anströmfläche (29) aufweist, **dadurch gekennzeichnet, dass** der Ausleger (23, 28, 33, 42, 47) an einem freien Ende eine Anströmstruktur (24, 30, 34, 43, 48) aufweist und die Anströmstruktur (24, 30, 34, 43, 48) mindestens eine weitere Anströmfläche (31, 32, 37, 38, 39, 40, 44, 45, 46, 49, 50) hat, wobei die Anströmstruktur (24, 34, 43, 48) im Wesentlichen V-förmig ausgebildet ist und sich die V-förmige Anströmstruktur (34, 43, 48) ausgehend von der ersten Anströmfläche (29) weg erstreckt.

2. Vorrichtung nach Anspruch 1, **dadurch gekennzeichnet, dass** eine Ebene und/oder eine Tangente einer Krümmung der Anströmfläche (29, 31, 32, 37, 38, 39, 40, 44, 45, 46, 49, 50) schräg zu einer Längsachse der Vorrichtung (10) ausgerichtet ist.

3. Vorrichtung nach Anspruch 1 oder 2, **dadurch gekennzeichnet, dass** eine Ebene und/oder eine Tangente einer Krümmung der Anströmfläche (29, 31, 32, 37, 38, 39, 40, 44, 45, 46, 49, 50), insbesondere eine Ebene der Reflektionsfläche (27) für den Laser (17), schräg zu der Strahlachse (26) des Lasers (17) ausgerichtet ist.

4. Vorrichtung nach einem der vorhergehenden Ansprüche, **dadurch gekennzeichnet, dass** die Reflektionsfläche (27) aus Aluminium besteht.

5. Vorrichtung nach einem der vorhergehenden Ansprüche, **dadurch gekennzeichnet, dass** der Abschnitt, eine Ebene und/oder eine Tangente einer Krümmung der mindestens einen Anströmfläche (29, 31, 32, 37, 38, 39, 40, 44, 45, 46, 49, 50) mit einem Winkel im Bereich von 35° bis 55°, insbesondere in einem Bereich von 40° bis 50°, vorzugsweise mit einem Winkel von 45°, schräg zur Hauptanströmrichtung (25) des Fluids, schräg zur einer Längsachse der Vorrichtung (10) und/oder schräg zu einer Strahlachse (26) des Lasers (17) der Messeinrichtung (16) ausrichtbar bzw. ausgerichtet ist.

6. Vorrichtung nach einem der vorhergehenden Ansprüche, **dadurch gekennzeichnet, dass** der Ausleger (23, 28, 33, 42, 47) einer Tragstruktur (14) zugeordnet ist.

7. Vorrichtung nach einem der vorhergehenden Ansprüche, **dadurch gekennzeichnet, dass** der Ausleger plattenartig ausgebildet ist und insbesondere eine Länge von bis zu 2 mm, insbesondere eine Länge im Bereich von 100 µm bis 250 µm, vorzugsweise eine Breite bis zu 0,5 mm, insbesondere eine Breite im Bereich von 20 µm bis 60 µm, besonders bevorzugt eine Dicke von bis zu 30 µm, insbesondere eine Dicke im Bereich von 1 µm bis 3 µm hat.

8. Vorrichtung nach einem der vorhergehenden Ansprüche, **dadurch gekennzeichnet, dass** der Ausleger (23, 28, 33, 42, 47) und/oder die Anströmstruktur (24, 30, 34, 43, 48) ein fluiddynamisches Profil aufweist, insbesondere ist das fluiddynamische Profil zum Realisieren eines dynamischen Auftriebes beim Umströmtwerden mittels des Fluids ausgebildet.

9. Vorrichtung nach einem der vorhergehenden Ansprüche, **dadurch gekennzeichnet, dass** eine Ebene der ersten Anströmfläche (29) des Auslegers (23, 28, 33, 42, 47) schräg oder rechtwinklig zur Ebene und/oder einer Tangente einer Krümmung der mindestens einen weiteren Anströmfläche (31, 32, 37, 38, 39, 40, 44, 45, 46, 49, 50) der Anströmstruktur (24, 30, 34, 43, 48) ausgerichtet ist.

10. Vorrichtung nach einem der vorhergehenden Ansprüche, **dadurch gekennzeichnet, dass** die Anströmstruktur (24, 30, 34, 43, 48) aus einem Fotolack, vorzugsweise SU-8, hergestellt ist.

11. Vorrichtung nach einem der vorhergehenden Ansprüche, **dadurch gekennzeichnet, dass** die Anströmstruktur (24, 30, 34, 43, 48) eine Höhe von bis zu 0,5 mm, insbesondere eine Höhe im Bereich von 20 µm bis 60 µm, vorzugsweise eine Länge von bis zu 0,5 mm, insbesondere eine Länge im Bereich von 20 µm bis 60 µm, besonders bevorzugt eine Dicke von bis zu 50 µm, insbesondere eine Dicke im Bereich von 6 µm bis 12 µm hat.

12. Vorrichtung nach einem der vorhergehenden Ansprüche, **dadurch gekennzeichnet, dass** sich die V-förmige Anströmstuktur (34) trichterartig in Richtung von der ersten Anströmfläche (29) weg öffnet oder die V-förmige Anströmstruktur (43, 48) eine rampenartige von der ersten Anströmfläche (29) weg gerichtete Spitze bildet.

13. Vorrichtung nach einem der vorhergehenden Ansprüche, **dadurch gekennzeichnet, dass** die Messeinrichtung (16) eine Strahlteiler-Platte und/oder eine Strahlteiler-Membran (19), insbesondere einen Pellicle-Strahlteiler, für einen Strahl (26) des Lasers (17) aufweist.

14. Vorrichtung nach einem der vorhergehenden Ansprüche, **dadurch gekennzeichnet, dass** die Messeinrichtung (16) einen, insbesondere zweidimensionalen positionsempfindlichen Detektor (20) zum Detektieren einer Position eines von dem Ausleger (23, 28, 33, 42, 47) reflektierten Strahls (54) des Lasers (17) aufweist.

15. Verfahren zum Bestimmen mindestens eines Parameters einer Strömung eines Fluids mit einer Vorrichtung (10) nach einem der vorhergehenden Ansprüche, bei dem der elastisch deformierbare Ausleger (23, 28, 33, 42, 47) in eine Strömung eingebracht wird, und bei dem mit der Messeinrichtung (16) die Deformation des Auslegers (23, 28, 33, 42, 47) aufgrund der auf die Anströmfläche (29, 31, 32, 37, 38, 39, 40, 44, 45, 46, 49, 50) einwirkenden Kräfte der Strömung gemessen wird, wobei mindestens ein Abschnitt der Anströmfläche (29, 31, 32, 37, 38, 39, 40, 44, 45, 46, 49, 50) schräg und/oder gekrümmt zu einer Hauptanströmrichtung (25) des Fluids ausgerichtet wird, und wobei eine Strahlachse (26) des Lasers (17) auf die Reflektionsfläche (27) des Auslegers (23, 28, 33, 42, 47) gerichtet wird.

16. Verfahren nach Anspruch 15, **dadurch gekennzeichnet, dass** sich die Deformation des Auslegers (23, 28, 33, 42, 47) aufgrund einer Verbiegung und/oder Torsion des Auslegers (23, 28, 33, 42, 47) aufgrund der auf die mindestens eine Anströmfläche (29, 31, 32, 37, 38, 39, 40, 44, 45, 46, 49, 50) einwirkenden Kräfte der Strömung des Fluids ergibt, wobei eine Geschwindigkeit der Strömung als eine Funktion der Verbiegung und/oder eine Strömungsrichtung, insbesondere ein Anströmwinkel, als eine Funktion der Torsion ausgewertet wird, vorzugsweise wird ein Winkelbereich von +90° bis - 90° in Bezug zur Hauptanströmrichtung (25) abgedeckt.

17. Verfahren nach Anspruch 15 oder 16, **dadurch gekennzeichnet, dass** eine Ebene und/oder eine Tangente einer Krümmung der Anströmfläche (29, 31, 32, 37, 38, 39, 40, 44, 45, 46, 49, 50) schräg zu der Hauptanströmrichtung (25) des Fluids ausgerichtet wird.

18. Verwendung einer Vorrichtung (10) nach einem der Ansprüche 1 bis 14 und/oder eines Verfahrens nach einem der Ansprüche 15 bis 17 zum Bestimmen mindestens eines Parameters einer Strömung eines Fluids, insbesondere als ein Cantilever-Anemometer, vorzugsweise in der Forschung, der Luft- und/oder Raumfahrt, der Windenergie, der Medizin und/oder im Zusammenhang mit Misch- und/oder Verbrennungsprozessen.

## Claims

1. Device for determining at least one parameter of a flow of a fluid with an elastically deformable cantilever (23, 28, 33, 42, 47), which possesses at least one inflow surface (29, 31, 32, 37, 38, 39, 40, 44, 45, 46, 49, 50) for the fluid, and with a measurement apparatus (16) for measuring the deformation of the cantilever (23, 28, 33, 42, 47), wherein at least one portion of the inflow surface (29, 31, 32, 37, 38, 39, 40, 44, 45, 46, 49, 50) is aligned in an oblique and/or curved manner to a main inflow direction (25) of the fluid, wherein the cantilever (23, 28, 33, 42, 47) has a reflection surface (27) on a side facing away from the inflow surface (29) and the measurement apparatus (16) has a laser (17), and a beam axis (26) of the laser (17) is directed upon the reflection surface (27) of the cantilever (23, 28, 33, 42, 47), and wherein the cantilever (23, 28, 33, 42, 47) has a first inflow surface (29), **characterized in that** the cantilever (23, 28, 33, 42, 47) has an inflow structure (24, 30, 34, 43, 48) at a free end and the inflow structure (24, 30, 34, 43, 48) possesses at least an additional inflow surface (31, 32, 37, 38, 39, 40, 44, 45, 46, 49, 50), wherein the inflow structure (24, 34, 43, 48) is formed to be substantially V-shaped and the V-shaped inflow structure (34, 43, 48) extends away starting from the first inflow surface (29).

2. The device according to claim 1, **characterized in that** a plane and/or a tangent of a curvature of the inflow surface (29, 31, 32, 37, 38, 39, 40, 44, 45, 46, 49, 50) is aligned obliquely to a longitudinal axis of the device (10).

3. The device according to claim 1 or 2, **characterized in that** a plane and/or a tangent of a curvature of the inflow surface (29, 31, 32, 37, 38, 39, 40, 44, 45, 46, 49, 50), in particular a plane of the reflection surface (27) for the laser (17), is aligned obliquely to the beam axis (26) of the laser (17).

4. The device according to any one of the preceding claims, **characterized in that** the reflection surface (27) consists of aluminum.

5. The device according to any one of the preceding claims, **characterized in that** the portion, a plane and/or a tangent of a curvature of the at least one inflow surface (29, 31, 32, 37, 38, 39, 40, 44, 45, 46, 49, 50) with an angle in the range from 35° to 55°, in particular in a range from 40° to 50°, preferably with an angle of 45°, is alignable and aligned, respectively, obliquely to the main inflow direction (25) of the fluid, obliquely to a longitudinal axis of the device (10) and/or obliquely to a beam axis (26) of the laser (17) of the measurement apparatus (16).

6. The device according to any one of the preceding claims, **characterized in that** the cantilever (23, 28, 33, 42, 47) is assigned to a carrying structure (14).

7. The device according to any one of the preceding claims, **characterized in that** the cantilever is formed in a plate-like manner and, in particular, possesses a length of up to 2 mm, in particular a length in the range from 100 µm to 250 µm, preferably a width up to 0.5 mm, in particular a width in the range from 20 µm to 60 µm, particularly preferred a thickness of up to 30 µm, in particular a thickness in the range from 1 µm to 3 µm.

8. The device according to any one of the preceding claims, **characterized in that** the cantilever (23, 28, 33, 42, 47) and/or the inflow structure (24, 30, 34, 43, 48) has a fluid dynamic profile, in particular, the fluid dynamic profile is designed for realizing a dynamic uplift when being flowed around by means of the fluid.

9. The device according to any one of the preceding claims, **characterized in that** a plane of the first inflow surface (29) of the cantilever (23, 28, 33, 42, 47) is aligned obliquely or at right angles to the plane and/or a tangent of a curvature of the at least one additional inflow surface (31, 32, 37, 38, 39, 40, 44, 45, 46, 49, 50) of the inflow structure (24, 30, 34, 43, 48).

10. The device according to any one of the preceding claims, **characterized in that** the inflow structure (24, 30, 34, 43, 48) is made of a photoresist, preferably SU-8.

11. The device according to any one of the preceding claims, **characterized in that** the inflow structure (24, 30, 34, 43, 48) possesses a height of up to 0.5 mm, in particular a height in the range from 20 µm to 60 µm, preferably a length of up to 0.5 mm, in particular a length in the range from 20 µm to 60 µm, particularly preferred a thickness of up to 50 µm, in particular a thickness in the range from 6 µm to 12 µm.

12. The device according to any one of the preceding claims, **characterized in that** the V-shaped inflow structure (34) opens in the direction away from the first inflow structure (29) in a funnel-like manner or the V-shaped inflow structure (43, 48) constitutes a ramp-like tip directed away from the first inflow surface (29).

13. The device according to any one of the preceding claims, **characterized in that** the measurement apparatus (16) has a beam splitter-plate and/or a beam splitter-membrane (19), in particular a pellicle-beam splitter, for a beam (26) of the laser (17).

14. The device according to any one of the preceding claims, **characterized in that** the measurement apparatus (16) has a, in particular two-dimensional, position-sensitive detector (20) for the detection of a position of a beam (54) of the laser (17) reflected by the cantilever (23, 28, 33, 42, 47).

15. Method for determining at least one parameter of a flow of a fluid with a device (10) according to any one of the preceding claims, wherein the elastically deformable cantilever (23, 28, 33, 42, 47) is introduced into a flow, and wherein the deformation of the cantilever (23, 28, 33, 42, 47) is measured with the measurement apparatus (16) due to the forces of the flow which act on the inflow surface (29, 31, 32, 37, 38, 39, 40, 44, 45, 46, 49, 50), wherein at least one portion of the inflow surface (29, 31, 32, 37, 38, 39, 40, 44, 45, 46, 49, 50) is aligned in an oblique and/or curved manner to a main inflow direction (25) of the fluid, and wherein a beam axis (26) of the laser (17) is directed upon the reflection surface (27) of the cantilever (23, 28, 33, 42, 47).

16. The method according to claim 15, **characterized in that** the deformation of the cantilever (23, 28, 33, 42, 47) occurs due to a distortion and/or torsion of the cantilever (23, 28, 33, 42, 47) due to the forces of the flow of the fluid which act on the at least one inflow surface (29, 31, 32, 37, 38, 39, 40, 44, 45, 46, 49, 50), wherein a velocity of the flow is evaluated as a function of the distortion and/or a flow direction, in particular an inflow angle, as a function of the torsion, preferably an angle area from +90° to - 90° is covered in relation to the main inflow direction (25).

17. The method according to claim 15 or 16, **characterized in that** a plane and/or a tangent of a curvature of the inflow surface (29, 31, 32, 37, 38, 39, 40, 44, 45, 46, 49, 50) is aligned obliquely to the main inflow surface (25) of the fluid.

18. Use of a device (10) according to any one of claims 1 to 14 and/or a method according to any one of claims 15 to 17 for determining at least one parameter of a flow of a fluid, in particular as a cantilever-anemometer, preferably in research, aviation and/or aerospace, wind energy, medicine and/or in connection with mixing and/or combustion processes.

## Revendications

1. Dispositif pour déterminer au moins un paramètre d'un écoulement d'un fluide avec un porte-à-faux élastiquement déformable (23, 28, 33, 42, 47), ayant au moins une surface d'entrée (29, 31, 32, 37, 38, 39, 40, 44, 45, 46, 49, 50) pour le fluide, et comportant un dispositif de mesure (16) pour mesurer la déformation du porte-à-faux (23, 28, 33, 42, 47), dans lequel au moins une partie de la surface d'entrée (29, 31, 32, 37, 38, 39, 40, 44, 45, 46, 49, 50) est aligné d'une manière oblique et / ou incurvée par rapport à la direction principale d'écoulement (25) du fluide, dans lequel le porte-à-faux (23, 28, 33, 42, 47) présente une surface de réflexion (27) sur un côté détourné de la surface d'entrée (29) et le dispositif de mesure (16) comporte un laser (17), un axe de faisceau (26) du laser (17) est dirigé sur la surface de réflexion (27) du porte-à-faux (23, 28, 33, 42, 47), et dans lequel le porte-à-faux (23, 28, 33, 42, 47) présente une première surface d'entrée (29), **caractérisé en ce que** le porte-à faux (23, 28, 33, 42, 47) présente une structure d'entrée (24, 30, 34, 43, 48) au niveau d'une extrémité libre, et la structure d'entrée (24, 30, 34, 43, 48) comprend au moins une surface d'entrée (31, 32, 37, 38, 39, 40, 44, 45, 46, 49, 50) supplémentaire, dans lequel la structure d'entrée (24, 34, 43, 48) est essentiellement en forme de V et la structure d'entrée en forme de V (34, 43, 48) s'étend à l'opposé de la première surface d'entrée (29).

2. Dispositif selon la revendication 1, **caractérisé en ce qu'**un plan et / ou une tangente d'une courbure de la surface d'entrée (29, 31, 32, 37, 38, 39, 40, 44, 45, 46, 49, 50) est aligné obliquement par rapport à un axe longitudinal du dispositif (10).

3. Dispositif selon la revendication 1 ou 2, **caractérisé en ce qu'**un plan et / ou une tangente d'une courbure de la surface d'entrée (29, 31, 32, 37, 38, 39, 40, 44, 45, 46, 49, 50), en particulier un plan de la surface de réflexion (27) pour le laser (17), est aligné obliquement par rapport à l'axe de faisceau (26) du laser (17).

4. Dispositif selon l'une des revendications précédentes, **caractérisé en ce que** la surface de réflexion (27) est constituée de l'aluminium.

5. Dispositif selon l'une des revendications précédentes, **caractérisé en ce que** la partie, un plan et / ou une tangente d'une courbure de l'au moins une surface d'entrée (29, 31, 32, 37, 38, 39, 40, 44, 45, 46, 49, 50) sous un angle dans l'intervalle de 35 à 55°, en particulier dans l'intervalle de 40 à 50°, de préférence sous un angle de 45°, respectivement peut être et est aligné obliquement par rapport à la direction principale d'écoulement (25) du fluide, obliquement par rapport à un axe longitudinal du dispositif (10) et / ou obliquement par rapport à l'axe de faisceau (26) du laser (17) du dispositif de mesure (16).

6. Dispositif selon l'une des revendications précédentes, **caractérisé en ce que** le porte-à-faux (23, 28, 33, 42, 47) est associée à une structure de support (14).

7. Dispositif selon l'une des revendications précédentes, **caractérisé en ce que** le porte-à-faux est conçu en forme de plaque et, en particulier, présente une longueur allant jusqu'à 2 mm, en particulier une longueur dans l'intervalle de 100 µm à 250 µm, de préférence une largeur allant jusqu'à 0,5 mm, notamment une largeur dans l'intervalle de 20 µm à 60 µm, plus préférablement, une épaisseur pouvant aller jusqu'à 30 µm, en particulier une épaisseur dans l'intervalle de 1 µm à 3 µm.

8. Dispositif selon l'une des revendications précédentes, **caractérisé en ce que** le porte-à-faux (23, 28, 33, 42, 47) et / ou la structure d'entrée (24, 30, 34, 43, 48) présentent un profil dynamique du fluide, en particulier le profil dynamique du fluide est conçu pour réaliser une poussée dynamique en circulant à l'aide du fluide

9. Dispositif selon l'une des revendications précédentes, **caractérisé en ce qu'**un plan de la première surface d'entrée (29) du porte-à-faux (23, 28, 33, 42, 47) est aligné de manière oblique ou perpendiculaire au plan et / ou à une tangente d'une courbure de l'au moins une surface d'entrée supplémentaire (31, 32, 37, 38, 39, 40, 44, 45, 46, 49, 50) de la structure d'entrée (24, 30, 34, 43, 48).

10. Dispositif selon l'une des revendications précédentes, **caractérisé en ce que** la structure d'entrée (24, 30, 34, 43, 48) est constituée d'un photorésist, de préférence du SU-8.

11. Dispositif selon l'une des revendications précédentes, **caractérisé en ce que** la structure d'entrée (24, 30, 34, 43, 48) présente une hauteur allant jusqu'à 0,5 mm, en particulier une hauteur dans l'intervalle de 20 µm à 60 µm, de préférence une longueur allant jusqu'à 0,5 mm, notamment une longueur dans l'intervalle de 20 µm à 60 µm, plus préférablement, une épaisseur pouvant aller jusqu'à 50 µm, en particulier une épaisseur dans l'intervalle de 6 µm à 12 µm.

12. Dispositif selon l'une des revendications précédentes, **caractérisé en ce que** la structure d'entrée en forme de V (34) s'ouvre comme un entonnoir dans la direction à l'écart de la première surface d'entrée (29) ou la structure d'entrée en forme de V (43, 48) constitue une crête semblant à une rampe dirigée à l'écart de la première surface d'entrée (29).

13. Dispositif selon l'une des revendications précédentes, **caractérisé en ce que** le dispositif de mesure (16) présente une plaque séparatrice de faisceau et / ou un diaphragme séparateur de faisceau (19), en particulier un séparateur de faisceau pelliculaire, destiné à un faisceau (26) du laser (17).

14. Dispositif selon l'une des revendications précédentes, **caractérisé en ce que** le dispositif de mesure (16) comporte un détecteur (20) sensible à la position, en particulier à deux dimensions, destiné à détecter la position d'un faisceau (54) du laser (17) réfléchi par le porte-à-faux (23, 28, 33, 42, 47).

15. Procédé pour déterminer au moins un paramètre d'un écoulement d'un fluide avec un dispositif (10) selon l'une des revendications précédentes, dans lequel un porte-à-faux élastiquement déformable (23, 28, 33, 42, 47) est introduit dans un écoulement et dans lequel la déformation du porte-à-faux (23, 28, 33, 42 , 47) est mesurée avec le dispositif de mesure (16) sur la base des forces de l'écoulement agissant sur la surface d'entrée (29, 31, 32, 37, 38, 39, 40, 44, 45, 46, 49, 50), dans lequel au moins une partie de la surface d'entrée (29, 31, 32, 37, 38, 39, 40, 44, 45, 46, 49, 50) est alignée de manière oblique et / ou incurvée dans une direction d'écoulement principale (25) du fluide, et dans lequel un axe faisceau (26) du laser (17) est dirigé sur la surface de réflexion (27) du porte-à-faux (23, 28, 33, 42, 47).

16. Procédé selon la revendication 15, **caractérisé en ce que** la déformation du porte-à-faux (23, 28, 33, 42, 47) se produit due à une déviation et / ou à une torsion du porte-à-faux (23, 28, 33, 42, 47) due aux forces de l'écoulement du fluide qui agissent sur l'au moins une surface d'entrée (29, 31, 32, 37, 38, 39, 40, 44, 45, 46, 49, 50), dans lequel une vitesse de l'écoulement est évalué en fonction de la déviation et / ou du sens d'écoulement, en particulier un angle d'entrée, en fonction de la torsion, de préférence une plage d'angle de +90° à -90° est couverte par rapport à la direction principale d'écoulement (25).

17. Procédé selon la revendication 15 ou 16, **caractérisé en ce qu'**un plan et / ou une tangente d'une courbure de la surface d'entrée (29, 31, 32, 37, 38, 39, 40, 44, 45, 46, 49, 50) est aligné obliquement par rapport à la direction principale d'écoulement (25) du fluide.

18. Utilisation d'un dispositif (10) selon l'une des revendications 1 à 14 et / ou un procédé selon l'une des revendications 15 à 17 pour déterminer au moins un paramètre d'un écoulement d'un fluide, notamment en tant qu'anémomètre en porte-à-faux, de préférence dans les domaines de la recherche, de l'aviation et / ou de l'astronautique, de l'énergie éolienne, de la médecine et / ou en relation avec des processus de mélange et / ou de combustion.
